# EUROPÄISCHE PATENTSCHRIFT

(11) **EP 1 002 724 B1**
(45) Veröffentlichungstag und Bekanntmachung des Hinweises auf die Patenterteilung: **25.06.2003**
(21) Anmeldenummer: 99113755.5
(22) Anmeldetag: 14.07.1999
(51) Int. Cl.: B65B 35/30, B65G 54/02, B65G 27/12

(54) **Verfahren zum Einbringen eines Gegenstandes oder mehrerer Gegenstande in eine Verpackung**
Method for inserting an object or a plurality of objects in a package
Procédé pour introduire un objet ou une pluralité d'objets dans un emballage

(30) Priorität: 19.11.1998 DE 19853166
(43) Veröffentlichungstag der Anmeldung: 24.05.2000
(73) Patentinhaber: Rovema Verpackungsmaschinen GmbH, 35463 Fernwald (DE)
(72) Erfinder: Kammler, Roman, Dr., 67547 Worms (DE); Kandl, Franz, 35428 Langgöns/Oberkleen (DE); Lutz, Erhard, 35325 Mücke (DE); Baur, Walter, Dr., 63584 Gründau (DE); Schneider, Bernd, 35463 Fernwald (DE); Wyss, Thomas, 35423 Lich (DE)

(56) Entgegenhaltungen:
- EP-A- 0 453 041
- EP-A- 0 764 584
- GB-A- 2 022 541

## Beschreibung

Die Erfindung betrifft ein Verfahren zum Einbringen eines Gegenstandes oder mehrerer Gegenstände in eine Verpackung, z. B. von Schlauchbeuteln in eine Faltschachtel, gemäß dem Oberbegriff des Anspruchs 1.

Es ist bekannt, jeweils einen Schlauchbeutel mittels eines Schiebers in eine liegende, offene Faltschachtel zu schieben. Dies erfolgt entweder bei stillstehender Faltschachtel, oder die Faltschachtel wird kontinuierlich weitertransportiert, während der mitbewegte Schieber den Schlauchbeutel einschiebt. Des weiteren ist bekannt, einen Stapel aufeinanderliegender Schlauchbeutel in eine Faltschachtel einzuschieben.

Das bekannte Verfahren hat den Nachteil, daß der Einbringvorgang insofern zeitintensiv ist, als ein relativ langer Einbringweg zwischen der Position des Bereitstellens eines Schlauchbeutels und der Position eines eingeschobenen Schlauchbeutels vom Schieber zurückgelegt werden muß. Selbst bei einem relativ schnellen Antrieb des Schiebers bewirkt dieser Einbringweg eine Begrenzung der Verpackungsgeschwindigkeit.

Die EP 0 453 041 offenbart eine Vorrichtung geeignet zum Einbringen eines Gegenstandes oder mehrer Gegenstände in eine Verpackung, wobei ein Träger zum Aufnehmen des Gegenstandes bzw. der Gegenstände vorgesehen ist, der derart schnell auf die Verpackung mittels eines Antriebs zu beweglich ist, und der an der Verpackung abrupt verzögerbar oder stoppbar ist, daß infolge einer Ausnutzung der kinetischen Energie des Gegenstandes bzw. der Gegenstände der bzw. diese bei einer Verzögerung oder einem Stoppen des Trägers von diesem abrutschen und in die Verpackung gelangen.

Das dieser Vorrichtung zu Grunde liegende Verfahren hat den Nachteil, daß das Abrutschen erst dann erfolgt, wenn sich die Verpackung an der Abwurfstelle befindet, und derart die Einbringleistung begrenzt wird.

Der Erfindung liegt die Aufgabe zu Grunde, die Einbringleistung und damit die Verpackungsgeschwindigkeit zu erhöhen.

Gelöst ist die Aufgabe gemäß dem kennzeichnenden Teil des Anspruchs 1.

Es ist ein Träger zum Aufnehmen des Gegenstandes bzw. der Gegenstände vorgesehen, der derart schnell auf die Verpackung mittels eines Antriebs zu bewegbar ist, und an der Verpackung abrupt verzögerbar oder stoppbar ist, daß infolge der Ausnutzung der kinetischen Energie des Gegenstandes bzw. der Gegenstände der bzw. diese bei einer Verzögerung oder einem Stoppen des Trägers von diesem abrutschen und in die Verpackung gelangen. Es werden der Gegenstand bzw. die Gegenstände in horizontaler Richtung beschleunigt und dann, unter Ausnutzung seiner bzw. ihrer kinetischen Energie, an einer Abwurfstelle in eine seitlich offene Verpackung abgeworfen.

Unmittelbar nach dem Abwerfen kann der Träger wieder zurückgesetzt werden, um einen neuen Gegenstand bzw. neue Gegenstände aufzunehmen, so daß das Zurücksetzen zumindest teilweise während des Wurfs und damit noch während des Einbringvorganges erfolgt. Hieraus ergibt sich ein Zeitvorteil, so daß die Zeit bis zum nächsten Einbringvorgang verringert ist. Ein weiterer Zeitvorteil ergibt sich daraus, daß der Träger sowohl für den Einbringvorgang als auch für das Zurücksetzen einen geringeren Weg als ein herkömmlicher Schieber zurücklegt, da der restliche Weg bis zur Verpackung durch die Wurffunktion passiert wird. Dieser verkürzte Weg führt ebenso zu einer höheren Verpackungsgeschwindigkeit.

Da die Verpackung an der Abwurfstelle vorbei transportiert wird, so kann sie während eines Transports zu einer weiteren Verpackungsstation mit der vorgeschlagenen Wurftechnik befüllt werden. Dabei ist der Einbringvorgang sicherer durchführbar, wenn analog Anspruch 2 die Verpackung zum Zwecke des Einwerfvorganges mit verringerter Geschwindigkeit an der Abwurfstelle vorbei transportiert und nach erfolgtem Einbringvorgang wieder beschleunigt wird. Infolge der Verlangsamung der Geschwindigkeit erfolgt das direkte Einführen eines Gegenstandes bei relativ niedriger Geschwindigkeit. Zwischen zwei Einführvorgängen kann die Geschwindigkeit vorbeibewegter Verpackungen relativ hoch sein, um insgesamt eine hohe Transportleistung für die Verpackungen zu erreichen.

Ein sicheres und zuverlässiges Einbringen wird erreicht, da die Abwurfgeschwindigkeit eines Gegenstandes mindestens elfmal größer als die Transportgeschwindigkeit der Verpackung im Zeitpunkt des Abwurfs oder der Ankunft an der Verpackung ist. Dabei ist es auch möglich, daß die Transportgeschwindigkeit Null ist und die Abwurfgeschwindigkeit einen relativ beliebigen Wert hat. Eine Transportgeschwindigkeit ungleich Null (Anspruch 3) im Zeitpunkt des Abwurfs oder des Gelangens des Gegenstandes in die Verpackung sowie permanent für eine Einrichtung zum Transportieren der Verpackungen hat aber den Vorteil, daß die Einrichtung nicht wiederholt aus dem Stillstand beschleunigt werden muß, was einen Zeitverlust bedeuten würde.

Es ist möglich, die Gegenstände relativ eng in den Verpackungen unterzubringen und unnötigen Freiraum in Richtung der Transportgeschwindigkeit in den Verpackungen zu vermeiden, da im Zeitpunkt des Abwurfs eine Vorhaltestrecke in Transportrichtung der Verpackung vorgesehen ist, so daß der Abwurf bereits dann erfolgt, wenn die Verpackung noch um die Vorhaltestrecke von dem Ort des Eintretens des Gegenstandes bzw. der Gegenstände in die Verpackung entfernt ist. Zudem ist dieser benötigte Freiraum umso kleiner, je größer das Verhältnis von Abwurfgeschwindigkeit zu Transportgeschwindigkeit ist.

Die Gegenstände können bei Ausnutzung ihrer kinetischen Energie nach ihrem Abwerfen und vor dem Erreichen der Verpackung über eine Gleitstrecke gleiten (Anspruch 4), um die Bewegungsstrecke des Trägers weiter zu verringern. Die Gleitstrecke kann dabei ein Gefälle aufweisen, um ein nennenswertes Abnehmen der kinetischen Energie eines Gegenstandes zu verhindern.

Im folgenden wird die Erfindung an Hand zwei Ausführungsbeispiele darstellender Figuren weiter beschrieben. Es zeigt:
- Figur 1: in einer Ansicht von oben eine Vorrichtung zum Einbringen von befüllten Schlauchbeuteln in eine auf einem Förderband vorbeitransportierte Faltschachtel, wobei die Schlauchbeutel auf einem Träger liegen, welcher mittels eines elektromagnetischen Linearantriebs auf die offene Faltschachtel zu bewegbar und derart stoppbar ist, daß die Schlauchbeutel vom Träger abrutschen und in die Faltschachtel gelangen;
- Figur 2: in einer Seitenansicht den Gegenstand der Figur 1, sowie
- Figur 3: in einer Seitenansicht einen Gegenstand analog Figur 2, jedoch in einer anderen Betriebsstellung beim Einführen der Schlauchbeutel und mit einem abgefederten Stoppelement zum Stoppen des Trägers.

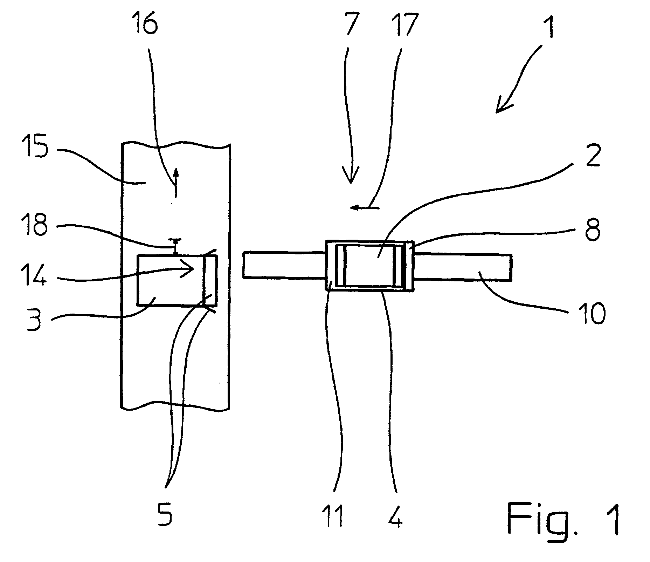

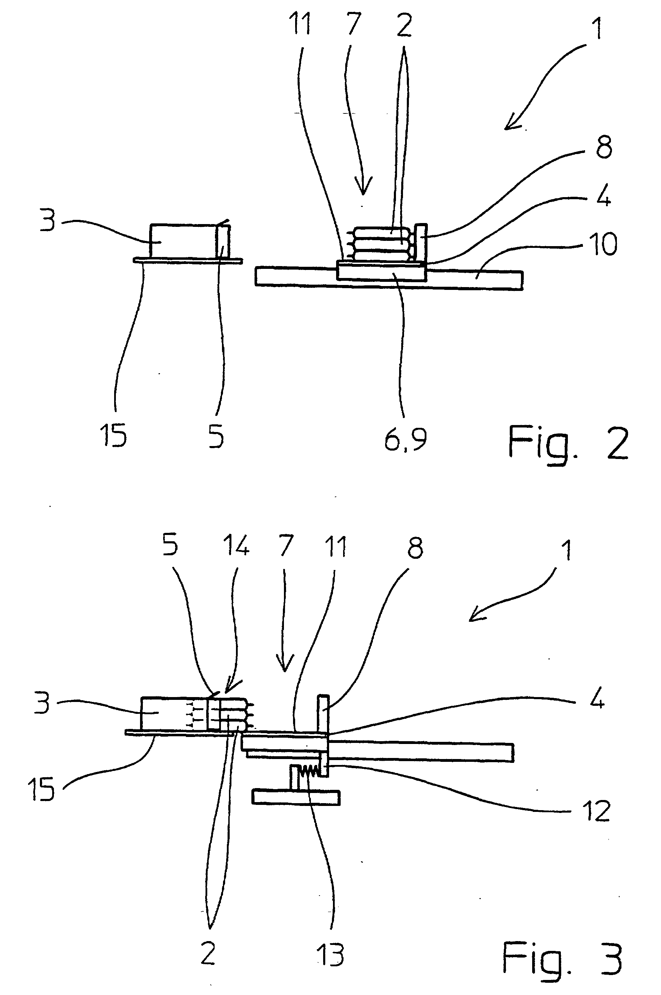

Bei einer Vorrichtung 1 zum Einbringen von jeweils drei Gegenständen 2 in eine seitlich offene, liegende Verpackung 3 ist ein Träger 4 zum Aufnehmen der Gegenstände 2 vorgesehen (Figur 1, Figur 2). Als Gegenstände 2 sind befüllte Schlauchbeutel vorgesehen, die in Faltschachteln mit offenen Laschen 5 eingebracht werden. Der Träger 4 ist mittels eines Antriebs 6 derart schnell horizontal auf die Verpackung 3 zu beweglich und vor der Verpackung 3 abrupt verzögerbar, daß infolge einer Ausnutzung der kinetischen Energie der Gegenstände 2 beim Stoppen des Trägers 4 die Gegenstände 2 an einer Abwurfstelle 7 vom Träger 4 abrutschen und in die Verpackung 3 gelangen.

Der Träger 4 weist an seiner der Verpackung 3 abgewandten Seite ein Rückhalteelement 8 zum Halten der Gegenstände 2 während einer Beschleunigungsphase auf. Der Antrieb 6 ist ein elektromagnetischer Linearantrieb. Dieser Linearmotor besteht aus einem beweglichen Teil 9, der starr mit dem Träger 4 verbunden ist, und einem statischen Teil 10, entlang dessen der bewegliche Teil 9 mitsamt dem Träger 4 bewegbar ist. Die tragende Oberfläche 11 des Trägers 4 ist eine Gleitfläche.

Beim Ausführungsbeispiel der Figur 3 wird der Träger 4 mittels eines Stoppelementes 12 und einer Feder 13 abrupt abgebremst, damit die Gegenstände 2 zeitgenau am Ort 14 der Verpackung 3 beim Passieren der Abwurfstelle 7 in die Verpackung 3 gleiten. Der ankommende Träger 4 schlägt mit seinem Stoppelement 12 gegen die Feder 13, staucht diese, gibt dabei die Gegenstände 2 frei und wird bei sich wieder streckender Feder 13 nach rechts in eine Position zurückgesetzt, in der er erneut drei Schlauchbeutel aufnimmt.

Auf einem Förderband 15 werden die Verpackungen 3 an der Abwurfstelle 7 vorbeitransportiert. Die Verpackungen 3 haben den gleichen Abstand zueinander auf dem Förderband 15. Das Förderband 15 wird derart abwechselnd schneller und langsamer in Transportrichtung 16 betrieben, daß die Verpackungen 3 zum Zwecke des Einwerfens der Gegenstände 2 langsam an der Abwurfstelle 7 vorbei transportiert und direkt zuvor und danach schnell weitertransportiert werden. Die in Einbringrichtung 17 ankommenden Gegenstände 2 werden durch Abschalten des Antriebs 6 an der Abwurfstelle 7 freigegeben, um in eine ankommende Verpackung 3 zu gelangen. Die Abwurfgeschwindigkeit ist zwölfmal größer als die Transportgeschwindigkeit im Zeitpunkt des Abwurfs, wodurch die Gegenstände 2 zuverlässig in die Verpackung 3 eingebracht werden, welche in Transportrichtung 16 relativ schmal ausgeführt ist.

Es ist eine Vorhaltestrecke 18 in Transportrichtung 16 für die Verpackung 3 vorgesehen, so daß der Abwurf bereits dann erfolgt, wenn die Verpackung 3 noch um den Betrag der Vorhaltestrecke 18 von dem Ort 14 des Eintretens der Gegenstände 2 in die Verpackung 3 entfernt ist. Während des Flugs der Gegenstände 2 von der Abwurfstelle 7 bis an die Verpackung 3 hat die Verpackung 3 eine der Vorhaltestrecke 18 entsprechende Strecke in Transportrichtung 16 zurückgelegt. Die Verpackung 3 passiert die Abwurfstelle 7 mit einer Transportgeschwindigkeit, die ungleich Null ist.

## Patentansprüche

1. Verfahren zum Einbringen eines Gegenstandes (2) oder mehrerer Gegenstände (2) in eine Verpackung, (3) wobei ein Träger (4) zum Aufnehmen und tragen des Gegenstandes (2) bzw. der Gegenstände (2) vorgesehen ist, der derart schnell mittels eines Antriebs (6) in horzontaler Richtung beweglich und abrupt verzögerbar oder stoppbar ist, daß infolge einer Ausnutzung der kinetischen Energie des Gegenstandes (2) bzw. der Gegenstände (2) der bzw. diese bei einer Verzögerung oder einem Stoppen des Trägers (4) von diesem abrutschen, **dadurch gekennzeichnet, dass** der Gegenstand (2) bzw. die Gegenstände (2) in horizontaler Richtung an einer Abwurfstelle (7) in eine seitlich offene Verpackung (3) geworfen wird bzw. werden, dass die Verpackung (3) an der Abwurfstelle (7) vorbeitransportiert wird, dass die Abwurfgeschwindigkeit mindestens elfmal größer als die Transportgeschwindigkeit der Verpackung (3) im Zeitpunkt des Abwurfs oder der Ankunft eines Gegenstandes (2) an der Verpackung (3) ist, und dass im Zeitpunkt des Abwurfs eine Vorhaltestrecke (18) in Transportrichtung (16) der Verpackung (3) vorgesehen ist, so dass der Abwurf bereits dann erfolgt, wenn die Verpackung (3) noch um die Vorhaltestrecke (18) von dem Ort (14) des Eintretens des Gegenstandes (2) bzw. der Gegenstände (2) in die Verpackung (3) entfernt ist.

2. Verfahren nach Anspruch 1, **dadurch gekennzeichnet, dass** die Verpackung (3) zum Zwecke des Einwerfvorganges mit verringerter Geschwindigkeit an der Abwurfstelle (7) vorbeitransportiert und nach erfolgtem Einbringvorgang wieder beschleunigt wird.

3. Verfahren nach Anspruch 1 oder Anspruch 2, **dadurch gekennzeichnet, dass** die Transportgeschwindigkeit an dem Ort (14) des Eintretens des Gegenstandes (2) bzw. der Gegenstände (2) in die Verpackung ungleich Null ist.

4. Verfahren nach einem der Ansprüche 1 bis 3, **dadurch gekennzeichnet, dass** der Gegenstand bzw. die Gegenstände bzw. ein unterster Gegenstand einer Gruppe übereinandergestapelter Gegenstände nach dem Abwerfen und vor dem Erreichen der Verpackung über eine Gleitstrecke gleitet bzw. gleiten.

## Claims

1. A method of introducing an object (2) or a plurality of objects (2) into a packet (3), wherein a carrier (4) is provided for receiving and carrying the object (2) or objects (2), is rapidly movable in a horizontal direction by means of a drive (6) and can be abruptly decelerated or stopped so that, through utilisation of the kinetic energy of the object (2) or objects (2), the latter slide(s) off the carrier (4) when the carrier (4) decelerates or stops, **characterised in that** the object (2) or objects (2) is/are horizontally projected into a laterally open packet (3) at a discharge point (7), **in that** the packet (3) is transported past the discharge point (7), **in that** the discharge speed is at least eleven times greater than the transportation speed of the packet (3) when the object (2) is discharged or arrives at the packet, and **in that**, at the time of discharge, an allowance interval (18) is provided in the transportation direction (16) of the packet (3) so that discharge only takes place when the packet (3) is still remote, by the amount of the allowance interval (18), from the point (14) at which the object (2) or objects (2) enter(s) the packet (3).

2. A method according to claim 1, **characterised in that** the packet (3) is transported past the discharge point (7) at reduced speed for the purpose of insertion and accelerated again after the insertion process has been carried out.

3. A method according to claim 1 or 2, **characterised in that** the transportation speed at the point (14) at which the object (2) or objects (2) enter(s) the packet is not equal to zero.

4. A method according to any one of claims 1 to 3, **characterised in that** the object or objects or a lowermost object of a group of objects stacked one above the other slide(s) over a sliding distance after discharge and before reaching the packet.

## Revendications

1. Procédé pour introduire un objet (2) ou plusieurs objets (2) dans un emballage (3), un support (4), destiné à recevoir et à porter l'objet (2) ou les objets (2), étant prévu, qui peut être déplacé au moyen d'un dispositif d'entraînement (6) dans la direction horizontale, et ralenti brusquement ou stoppé, suffisamment rapidement pour que, par exploitation de l'énergie cinétique de l'objet (2) ou des objets (2), celui-ci ou ceux-ci glissent du support (4), pendant un ralentissement ou un arrêt de ce support, **caractérisé en ce que** l'objet (2) ou les objets (2) est ou sont éjecté(s) dans la direction horizontale en un emplacement d'éjection (7), dans un emballage (3) ouvert latéralement, **en ce que** l'emballage (3) est transporté devant l'emplacement d'éjection (7), **en ce que** la vitesse d'éjection est au moins onze fois supérieure à la vitesse de transport de l'emballage (3) à l'instant de l'éjection ou de l'arrivée d'un objet (2) à l'emballage (3), et **en ce qu'**à l'instant de l'éjection, il est prévu une distance de course (18) dans le sens de transport (16) de l'emballage (3), de sorte que l'éjection s'effectue déjà lorsque l'emballage (3) est encore éloigné de la distance de course (18), de l'emplacement (14) d'entrée de l'objet (2) ou des objets (2) dans l'emballage (3).

2. Procédé selon la revendication 1, **caractérisé en ce que** pour l'opération d'introduction, l'emballage (3) est transporté à vitesse réduite devant l'emplacement d'éjection (7) et est à nouveau accéléré après achèvement de l'opération d'introduction.

3. Procédé selon la revendication 1 ou 2, **caractérisé en ce que** la vitesse de transport à l'emplacement (14) de l'entrée de l'objet (2) ou des objets (2) dans l'emballage n'est pas égale à zéro.

4. Procédé selon l'une des revendications 1 à 3, **caractérisé en ce que** l'objet ou les objets ou l'objet le plus bas d'un groupe d'objets empilés les uns sur les autres, glisse ou glissent sur une distance de glissement après l'éjection et avant d'atteindre l'emballage.
